# EUROPÄISCHE PATENTSCHRIFT

(11) **EP 3 420 386 B1**
(45) Veröffentlichungstag und Bekanntmachung des Hinweises auf die Patenterteilung: **04.01.2023**
(21) Anmeldenummer: 17707808.6
(22) Anmeldetag: 24.02.2017
(51) Int. Cl.: G02B 1/10, G02B 5/08

(54) **OPTISCHE BESCHICHTUNG UND VERFAHREN ZUR HERSTELLUNG EINER OPTISCHEN BESCHICHTUNG MIT VERMINDERTER LICHTSTREUUNG**
OPTICAL COATING AND METHOD FOR PRODUCING AN OPTICAL COATING WITH REDUCED LIGHT SCATTERING
REVÊTEMENT OPTIQUE ET PROCÉDÉ DE FABRICATION D'UN REVÊTEMENT OPTIQUE AVEC UNE DISPERSION DE LUMIÈRE RÉDUITE

(30) Priorität: 25.02.2016 DE 102016103339
(43) Veröffentlichungstag der Anmeldung: 02.01.2019
(73) Patentinhaber: Fraunhofer-Gesellschaft zur Förderung der angewandten Forschung e.V., 80686 München (DE)
(72) Erfinder: VON FINCK, Alexander, Dr., 10243 Berlin (DE); SCHRÖDER, Sven, Dr., 06217 Merseburg (DE); WILBRANDT, Steffen, Dr., 07747 Jena (DE); STENZEL, Olaf, Dr., 07751 Bucha (DE); DUPARRÉ, Angela, Dr., 07745 Jena (DE); NOTNI, Gunther, Prof. Dr., 07749 Jena (DE)
(74) Vertreter: Epping - Hermann - Fischer
(86) Internationale Anmeldenummer: PCT/EP2017/054373
(87) Internationale Veröffentlichungsnummer: WO 2017/144684

(56) Entgegenhaltungen:
- EP-A2- 1 227 346
- DE-A1- 10 309 084
- DE-A1-102005 016 591
- US-A1- 2004 247 485
- US-A1- 2010 301 437
- US-A1- 2012 268 824
- US-A1- 2013 265 572

## Beschreibung

Die Erfindung betrifft eine optische Beschichtung, die sich durch eine verminderte Lichtstreuung auszeichnet, und ein Verfahren zur Herstellung einer solchen optischen Beschichtung.

Die Funktion von optischen Komponenten, die beispielsweise mit einer reflexionserhöhenden oder reflexionsmindernden Beschichtung versehen sind, kann durch Streulicht beeinträchtigt werden, dass insbesondere an Kontaminationen an der Oberfläche entstehen kann. Beispielsweise wird durch Streuverluste die Transmission oder Reflexion reduziert. Durch Lichtstreuung entsteht Störlicht, wodurch beispielsweise bei abbildenden optischen Systemen der Kontrast vermindert werden kann.

Kontaminationen an der Oberfläche von optischen Komponenten, durch die eine unerwünschte Lichtstreuung bewirkt werden kann, lassen sich oftmals nicht komplett vermeiden und nehmen üblicherweise während des Einsatzes der optischen Komponente stetig zu. Oftmals ist auch die Reinigung der optischen Komponente zur Verminderung von Kontaminationen erschwert oder gar nicht möglich, zum Beispiel bei optischen Elementen für die Anwendung im Weltraum.

Die Ursache von Lichtstreuung können nicht nur Kontaminationen sein, sondern beispielsweise auch Defekte in der Schichtstruktur oder funktionale Nanostrukturen.

Der Erfindung liegt die Aufgabe zu Grunde, eine optische Beschichtung anzugeben, die sich durch eine verminderte Lichtstreuung auszeichnet. Weiterhin soll ein Verfahren zur Herstellung der optischen Beschichtung angegeben werden.

Diese Aufgaben werden durch ein Verfahren zur Herstellung der optischen Beschichtung gemäß Anspruch 1 gelöst. Vorteilhafte Ausgestaltungen und Weiterbildungen der Erfindung sind Gegenstand der abhängigen Ansprüche.

Gemäß zumindest einer Ausgestaltung ist die optische Beschichtung dazu eingerichtet, elektromagnetische Strahlung einer vorgegebenen Wellenlänge oder eines vorgegebenen Wellenlängenbereichs zu reflektieren oder zu transmittieren. Die vorgegebene Wellenlänge oder der vorgegebene Wellenlängenbereich kann beispielsweise im sichtbaren Bereich des optischen Spektrums liegen oder den sichtbaren Bereich umfassen. Alternativ ist es auch möglich, dass die vorgegebene Wellenlänge oder der vorgegebene Wellenlängenbereich ganz oder teilweise im UV-Bereich oder im IR-Bereich liegt.

Die optische Beschichtung kann insbesondere eine reflexionserhöhende oder eine reflexionsmindernde Beschichtung sein. Als reflexionserhöhende Beschichtung kann die optische Beschichtung zum Beispiel auf einen Reflektor aufgebracht sein. Im Fall einer reflexionsmindernden Beschichtung kann die optische Beschichtung zum Beispiel auf ein transparentes optisches Element aufgebracht sein, dass sich durch eine hohe Transmission auszeichnen soll.

Die optische Beschichtung weist mindestens eine Streuzone auf. Die Streuzone ist ein Bereich der optischen Beschichtung, in dem Streuung auftreten kann. Die Streuzone ist bei einer Ausgestaltung an der Oberfläche der optischen Beschichtung angeordnet. Die Streuzone kann ein Oberflächenbereich der optischen Beschichtung sein, in dem Kontaminationen auftreten können, die zur Streuung elektromagnetischer Strahlung führen können. Alternativ und nicht vom Schutzumfang umfasst kann die Streuzone ein Bereich der optischen Beschichtung sein, der Kontaminationen und/oder Defekte und/oder Nanostrukturen aufweisen kann, die zur Streuung der elektromagnetischen Strahlung geeignet sind. Die Streuzone ist mit anderen Worten ein Bereich, in der Lichtstreuung durch Kontaminationspartikel, Defekte oder gezielt hergestellte Nanostrukturen auftreten kann. Der Begriff "Streuzone" bezeichnet hier und im Folgenden einen Bereich der Beschichtung, in dem aufgrund der Beschaffenheit oder von Kontaminationen wie zum Beispiel Partikeln, insbesondere Staubpartikeln, oder Fluiden Streuung auftreten könnte. Dies bedeutet aber nicht, dass in diesem Bereich Streuung beabsichtigt ist, vielmehr soll die Streuung in der Streuzone bei der hierin beschriebenen optischen Beschichtung gezielt vermindert werden.

Bei der optischen Beschichtung weist die elektrische Feldstärke der elektromagnetischen Strahlung in der Streuzone vorteilhaft in Minimum auf, um die Streuung der elektromagnetischen Strahlung in der Streuzone zu reduzieren. Die elektrische Feldstärke der beim bestimmungsgemäßen Gebrauch der optischen Beschichtung reflektierten und/oder transmittieren Strahlung ist vorteilhaft im Bereich der Streuzone geringer als in anderen Bereichen der optischen Beschichtung. Auf diese Weise wird vorteilhaft erreicht, dass an dem Kontaminationen, Defekten und/oder Nanostrukturen in der Streuzone nur eine vergleichsweise geringe Lichtstreuung auftritt.

Die hier beschriebene optische Beschichtung macht sich das Prinzip zu Nutze, unerwünschte Lichtstreuung nicht ausschließlich durch Vermeidung oder Verminderung von Kontaminationen oder Defekten zu reduzieren, sondern die Eigenschaften der optischen Beschichtung so einzurichten, dass die optische Beschichtung besonders unempfindlich gegenüber der Entstehung von Lichtstreuung ist. Dadurch, dass die elektrische Feldstärke im Bereich der Streuzone besonders gering ist, entsteht selbst dann nur vergleichsweise wenig Streulicht, wenn die Streuzone Kontaminationen, Defekte und/oder Nanostrukturen aufweist.

Gemäß zumindest einer Ausgestaltung weist die optische Beschichtung mindestens eine Schicht auf, deren Dicke derart eingestellt ist, dass die elektrische Feldstärke im Bereich der Streuzone ein Minimum aufweist. Es hat sich herausgestellt, dass sich die elektrische Feldstärke an einer vorgegebenen Position der optischen Beschichtung, insbesondere im Bereich der Streuzone, durch Variation der Schichtdicke mindestens einer Schicht gezielt beeinflussen lässt.

Durch eine Simulationsrechnung, bei der die Dicke mindestens einer oder mehrerer Schichten der optischen Beschichtung variiert wird, kann somit die Dicke der mindestens einen oder der mehreren Schichten derart eingestellt werden, dass die Feldstärke in der Streuzone ein Minimum aufweist. Zur Durchführung der Simulationsrechnung können Simulationsprogramme zum Design optischer Schichtsysteme verwendet werden. Solche Simulationsprogramme sind dem Fachmann an sich bekannt und werden insbesondere dazu verwendet, die Schichtdicken für ein vorgegebenes Schichtsystem derart zu variieren, dass in einem vorgegebenen Wellenlängen- und/oder Winkelbereich eine möglichst gute Anpassung der Transmission oder Reflexion an eine Zielvorgabe erzielt wird. Alternativ oder zusätzlich können eine oder mehrere andere optische Eigenschaften der optischen Beschichtung optimiert werden, wie zum Beispiel die Farbe, Phase, Gruppenverzögerung, Gruppenverzögerungsdispersion und/oder Absorption.

Die Schicht, deren Dicke bei der Simulationsrechnung variiert und derart eingestellt wird, dass die Feldstärke in der Streuzone ein Minimum aufweist, kann insbesondere die oberste Schicht der optischen Beschichtung sein. Beispielsweise kann die optische Beschichtung eine metallische Spiegelschicht mit einer darauf angeordneten dielektrischen Schutzschicht aufweisen, wobei die Dicke der dielektrischen Schutzschicht derart eingestellt wird, dass die Feldstärke in einer Streuzone im Bereich der Oberfläche der dielektrischen Schutzschicht minimal wird. Alternativ ist es aber auch möglich, dass die Dicke mindestens einer im Inneren der optischen Beschichtung angeordneten Schicht variiert wird. Insbesondere kann auch die Dicke mehrerer Schichten gleichzeitig variiert werden.

Bei der erfindungsgemäßen Ausgestaltung der optischen Beschichtung ist die Streuzone an der Oberfläche der optischen Beschichtung angeordnet. Insbesondere kann die Streuzone ein Bereich an der Oberfläche der optischen Beschichtung sein, der Kontaminationspartikel oder Defekte, zum Beispiel Kratzer in der Oberfläche, aufweist. Bei dieser Ausgestaltung liegt das Minimum der elektrischen Feldstärke vorteilhaft an der Oberfläche oder oberhalb der Oberfläche der obersten Schicht der optischen Beschichtung.

Im Fall von Defekten wie zum Beispiel Kratzern, die direkt an der Oberfläche der obersten Schicht angeordnet sind oder sich teilweise in die Oberfläche der obersten Schicht hinein erstrecken, weist die elektrische Feldstärke vorzugsweise ein Minimum an der Oberfläche der obersten Schicht oder entsprechend der Tiefe der Kratzer etwas unterhalb der Oberfläche der obersten Schicht auf.

Wenn die Streuzentren hauptsächlich durch Kontaminationspartikel gebildet sind, die auf der Oberfläche der obersten Schicht angeordnet sind, weist die elektrische Feldstärke vorteilhaft ein Minimum oberhalb der Oberfläche der obersten Schicht auf. Die Lage des Minimums der elektrischen Feldstärke wird in diesem Fall vorzugsweise an den mittleren Durchmesser der Kontaminationspartikel angepasst. Wenn beispielsweise die zu erwartenden Kontaminationspartikel im Mittel einen Durchmesser von etwa 40 nm aufweisen, kann das Minimum der elektrischen Feldstärke zum Beispiel 20 nm oberhalb der Oberfläche der obersten Schicht positioniert werden. Das Minimum der elektrischen Feldstärke liegt in diesem Fall somit in vertikaler Richtung gesehen in etwa in der Mitte des Bereichs an der Oberfläche, der Kontaminationspartikel aufweist. Die Lage des Minimums der elektrischen Feldstärke oberhalb der Oberfläche beträgt also vorzugsweise in etwa die Hälfte des mittleren Durchmessers der Kontaminationspartikel. Erfindungsgemäß liegt das Minimum der elektrischen Feldstärke in einem Bereich zwischen 10 nm und 2,5 µm oberhalb der Oberfläche der obersten Schicht.

Dieser Absatz beschreibt eine Ausgestaltung, die nicht unter den Schutzumfang der Ansprüche fällt.

Die Streuzone muss aber nicht notwendigerweise an der Oberfläche der optischen Beschichtung angeordnet sein. Vielmehr kann die Streuzone einen beliebigen Bereich der optischen Beschichtung umfassen, indem aufgrund von Defekten oder Nanostrukturen mit einer erhöhten Streuung von Strahlung zu rechnen ist. Die optische Beschichtung kann insbesondere ein Substrat aufweisen, und die Streuzone eine Grenzfläche zwischen dem Substrat und der optischen Beschichtung umfassen. Die unmittelbare Umgebung der Substratoberfläche kann zum Beispiel eine erhöhte Defektdichte aufweisen, die zu einer Lichtstreuung führen kann. Eine solche erhöhte Defektdichte im Bereich der Substratoberfläche kann zum Beispiel durch eine Rauheit des Substrats oder eine defektreiche Anwachszone der zuerst aufgebrachten Schicht bedingt sein.

Bei einer weiteren nicht unter die Patentansprüche fallenden Ausgestaltung weist die optische Beschichtung ein Nanostruktur auf, und die Streuzone umfasst die Nanostruktur. Nanostrukturen werden bei optischen Beschichtungen oftmals gezielt an der Oberfläche erzeugt, um eine reflexionsmindernde Wirkung zu erzielen. Weiterhin können Nanostrukturen auch als diffraktive optische Elemente vorgesehen sein. Um die Lichtstreuung in einer solchen Nanostruktur zu vermindern, wird bei der optischen Beschichtung vorzugsweise das Minimum der elektrischen Feldstärke im Bereich der Nanostruktur angeordnet.

Es wird ein Verfahren zur Herstellung einer optischen Beschichtung mit verminderter Lichtstreuung angegeben. Gemäß zumindest einer Ausführungsform umfasst das Verfahren das Bestimmen eines Schichtdesigns der optischen Beschichtung, wobei das Bestimmen des Schichtdesigns eine Bestimmung der Anordnung der Schichten, eine Bestimmung der Schichtmaterialien und das Bestimmen der Schichtdicken umfasst. Für die Schichtdicken können zunächst vorläufige Ausgangswerte festgelegt werden, die nachfolgend rechnerisch optimiert werden.

Bei dem Verfahren erfolgt vorteilhaft eine rechnerische Optimierung der Reflexion oder Transmission der optischen Beschichtung für eine vorgegebene Wellenlänge oder einen vorgegebenen Wellenlängenbereich durch Variation mindestens eines Schichtparameters. Der mindestens eine Schichtparameter kann insbesondere mindestens eine Schichtdicke sein. Die vorgegebene Wellenlänge oder der vorgegebene Wellenlängenbereich ergibt sich aus der vorgesehenen Anwendung der optischen Beschichtung. Bei der rechnerischen Optimierung wird vorzugsweise die Dicke mindestens einer Schicht oder vorzugsweise von mehreren Schichten, insbesondere von allen Schichten der optischen Beschichtung, variiert, um eine für die optische Beschichtung errechnete Transmission oder Reflexion möglichst gut an eine Zielvorgabe anzupassen. Eine solche Optimierung und dafür geeignete Simulationsprogramme sind dem Fachmann an sich bekannt und werden deshalb nicht näher erläutert.

Weiterhin wird bei dem Verfahren vorteilhaft die Lage einer Streuzone der optischen Beschichtung bestimmt, wobei die Streuzone Kontaminationen, Defekte und/oder Nanostrukturen aufweist, die zur Streuung elektromagnetischer Strahlung geeignet sind. Zur Bestimmung der Lage der Streuzone wird beispielsweise abgeschätzt, in welchem Bereich bei der bestimmungsgemäßen Verwendung der optischen Beschichtung mit Lichtstreuung zu rechnen ist. Dies ist ein Bereich an der Oberfläche der optischen Beschichtung, in dem beim Betrieb mit Kontamination durch Staub, Partikel und/oder Fluide zu rechnen ist.

Bei dem Verfahren erfolgt weiterhin eine rechnerische Optimierung der Lage eines Minimums der elektrischen Feldstärke durch Variation mindestens eines Schichtparameters derart, dass die elektrische Feldstärke in der Streuzone ein Minimum aufweist. Hierzu wird vorzugsweise eine Simulationsrechnung durchgeführt, in der Verlauf der elektrischen Feldstärke in der optischen Beschichtung bei der vorgegebenen Wellenlänge oder dem vorgegebenen Wellenlängenbereich simuliert wird. Die rechnerische Optimierung der Lage eines Minimums der elektrischen Feldstärke kann beispielsweise gleichzeitig mit der Optimierung der Reflexion oder Transmission oder in einem nachfolgenden Rechenschritt erfolgen.

Der Schichtparameter, der zur rechnerischen Optimierung der Lage des Minimums der elektrischen Feldstärke variiert wird, ist vorzugsweise die Dicke mindestens einer Schicht der optischen Beschichtung. Insbesondere können zunächst die Schichtdicken derart optimiert werden, dass die Anforderungen für die Reflexion und/oder Transmission so gut wie möglich erfüllt werden, und nachfolgend die Dicke mindestens einer Schicht so optimiert werden, dass das Minimum der elektrischen Feldstärke in der Streuzone liegt.

Die mindestens eine Schicht, deren Dicke variiert wird, kann insbesondere die oberste Schicht der optischen Beschichtung sein. Insbesondere kann die mindestens eine Schicht eine Oxid- oder Fluoridschicht sein, beispielsweise eine Metalloxidschicht.

Bei einer bevorzugten Ausgestaltung des Verfahrens werden die rechnerische Optimierung der Reflexion oder Transmission und die rechnerische Optimierung der Lage des Minimums der elektrischen Feldstärke mindestens einmal wiederholt. Durch die Variation einer Schichtdicke derart, dass die elektrische Feldstärke in der Streuzone mit Minimum aufweist, können die vorzugsweise vorher optimierten Reflexions- oder Transmissionseigenschaften möglicherweise beeinträchtigt werden. In diesem Fall kann nach der Optimierung der mindestens einen Schichtdicke gegebenenfalls erneut eine Optimierung einer oder mehrerer Schichtdicken in Bezug auf die Reflexions- oder Transmissionseigenschaften erfolgen, und gegebenenfalls eine erneute Optimierung in Bezug auf die Lage des Minimums der elektrischen Feldstärke. Diese Schritte können gegebenenfalls mehrfach wiederholt werden. Auf diese Weise können iterativ optimale Schichtdicken aufgefunden werden, für die gleichzeitig die Anforderungen an die Reflexionseigenschaften oder Transmissionseigenschaften und an die Lage des Minimums der elektrischen Feldstärke in der Streuzone so gut wie möglich erfüllt werden.

Es ist auch möglich, die rechnerische Optimierung der Reflexion oder Transmission und die rechnerische Optimierung der Lage des Minimums der elektrischen Feldstärke gleichzeitig durchzuführen. Beispielsweise können die Reflexion oder Transmission durch Variation einer oder mehrerer Schichtdicken unter der Randbedingung optimiert werden, dass die elektrische Feldstärke in der Streuzone ein Minimum aufweist. Sowohl bei der iterativen Optimierung der Schichtparameter als auch bei der gleichzeitigen Optimierung der Schichtparameter, insbesondere der Schichtdicken, wird vorteilhaft jeweils ein Kompromiss zwischen möglichst guten Reflexions- und Transmissionseigenschaften und der Lage des Minimums der elektrischen Feldstärke aufgefunden.

Bei einer Ausgestaltung des Verfahrens umfasst das Bestimmen der Lage der Streuzone eine Abschätzung der kritischen oder typischerweise zu erwartenden Partikeldurchmesser von zu erwartenden Kontaminationen an der Oberfläche der optischen Beschichtung. Die Lage der Streuzone wird vorzugsweise derart bestimmt, dass die Streuzone im Bereich der Partikeldurchmesser oberhalb der Oberfläche liegt. Die Streuzone beginnt somit in vertikaler Richtung an der Oberfläche und endet in einem Abstand von der Oberfläche, welcher den Partikeldurchmessern oder im Fall unterschiedlich großer Partikel dem mittleren Partikeldurchmesser entspricht. Wenn zum Beispiel an der Oberfläche der Beschichtung Kontaminationen mit Partikelgrößen von 20 nm bis 40 nm erwartet werden, wird als Streuzone zum Beispiel der Bereich zwischen 0 nm und 40 nm über der Oberfläche bestimmt.

Nach der rechnerischen Optimierung der Schichtparameter, insbesondere der Schichtdicken, wird die optische Beschichtung mit den optimierten Schichtparametern hergestellt. Die optische Beschichtung wird zum Beispiel mit an sich bekannten Beschichtungsverfahren auf ein Substrat aufgebracht, wobei das Substrat insbesondere eine optische Komponente und die optische Beschichtung eine reflexionserhöhende oder reflexionsmindernde Beschichtung sein kann.

Weitere vorteilhafte Ausgestaltungen des Verfahrens ergeben sich aus der vorherigen Beschreibung der optischen Beschichtung und umgekehrt.

Die optische Beschichtung ist insbesondere zur Anwendung in optischen Systemen vorgesehen, die eine hohe Empfindlichkeit gegenüber Streulicht durch Kontaminationen oder Defekte aufweisen. Die optische Beschichtung kann zum Beispiel auf optische Komponenten wie Spiegel, Linsen, optische Fenster (zum Beispiel zum Schutz von empfindlichen Sensoren, zur Trennung von Füllgasen oder als Austrittsfenster von Lasern), Strahlteiler oder Polarisationsoptiken aufgebracht werden.

Weiterhin ist die optische Beschichtung besonders für optische Systeme geeignet, die hohen Laserleistungen ausgesetzt sind. Die optische Beschichtung zeichnet sich insbesondere durch eine geringe Empfindlichkeit gegenüber laserinduzierter Zerstörung, insbesondere bei Laserpulsen im Nanosekundenbereich, aus, da diese ebenfalls stark mit der lokalen Feldstärke korreliert ist.

Die Erfindung wird im Folgenden anhand von Ausführungsbeispielen im Zusammenhang mit den Figuren 1 bis 5 näher erläutert.

Es zeigen:
- Figur 1: eine schematische Darstellung eines Querschnitts durch eine optische Beschichtung gemäß einem Ausführungsbeispiel und den Verlauf der elektrischen Feldstärke E,
- Figur 2: eine grafische Darstellung der Streuverluste in Abhängigkeit von der Schichtdicke der obersten Schicht für ein Ausführungsbeispiel der optischen Beschichtung,
- Figur 3: eine schematische Darstellung von Ausführungsbeispielen der optischen Beschichtung mit verschiedenen Schichtdicken der obersten Schicht,
- Figur 4: eine schematische grafische Darstellung der gestreuten Lichtleistung in Abhängigkeit vom Streuwinkel für die in Figur 3 gezeigten Ausführungsbeispiele mit verschiedenen Schichtdicken der obersten Schicht, und
- Figur 5: eine schematische grafische Darstellung der Reflektivität und des Streuverlusts in Abhängigkeit vom Kontaminationsgrad der Oberfläche für ein optisches Schichtsystem gemäß einem Ausführungsbeispiel und ein Vergleichsbeispiel.

Gleiche oder gleich wirkende Bestandteile sind in den Figuren mit den gleichen Bezugszeichen versehen. Die dargestellten Bestandteile sowie die Größenverhältnisse der Bestandteile untereinander sind nicht als maßstabsgerecht anzusehen.

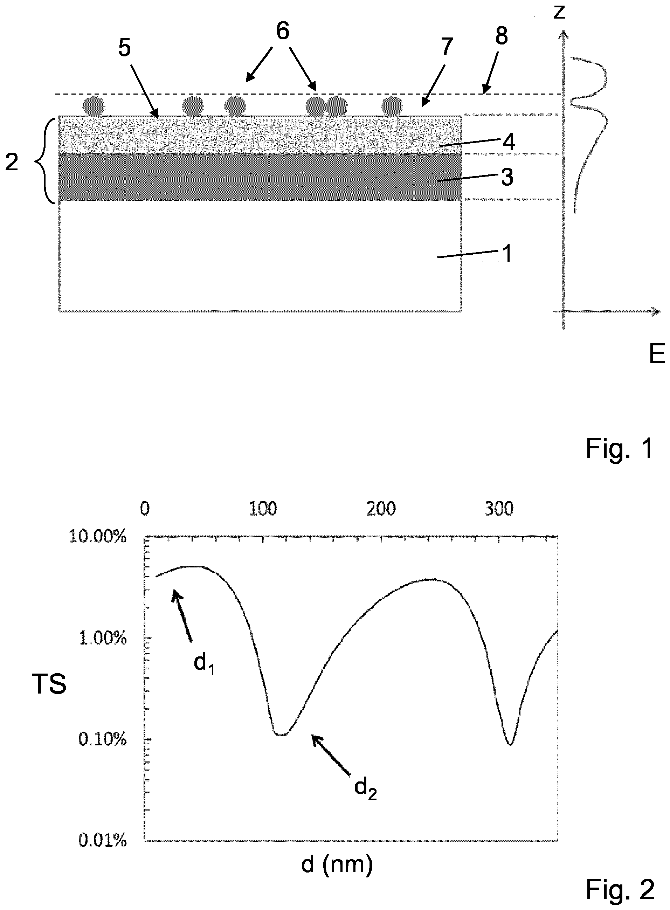

Das in Figur 1 dargestellte Ausführungsbeispiel einer optischen Beschichtung 2 weist eine auf ein Substrat 1 aufgebrachte Schichtenfolge auf, die eine Metallschicht 3 und eine darauf angeordnete dielektrische Schicht 4 aufweist. Bei dem Ausführungsbeispiel ist die optische Beschichtung 2 eine reflexionserhöhende Beschichtung, bei der eine hohe Reflexion insbesondere durch die Metallschicht 3 erzielt wird, bei der es sich zum Beispiel um eine Aluminiumschicht handeln kann. Die auf die Metallschicht 3 aufgebrachte dielektrische Schicht 4 ist vorzugsweise eine Oxidschicht, insbesondere eine Metalloxidschicht wie zum Beispiel eine Al₂O₃-Schicht. Die dielektrische Schicht 4 ist vorzugsweise im Wesentlichen transparent und dient insbesondere zum Schutz der Metallschicht 3 vor äußeren Einflüssen.

Bei der Verwendung der optischen Beschichtung 2 können sich an der Oberfläche 5 der optischen Beschichtung 2 Kontaminationspartikel 6 anlagern, die zu einer unerwünschten Streuung von Licht führen könnten. Dies ist insbesondere dann der Fall, wenn eine Reinigung der Oberfläche 5 bei der Anwendung der optischen Beschichtung 2 erschwert oder nicht möglich ist, oder wenn die optische Beschichtung unter Bedingungen eingesetzt wird, bei der die Oberfläche 5 leicht verschmutzt werden kann.

Da die Kontaminationspartikel 6 mögliche Streuzentren für Licht ausbilden, stellt der Bereich über der Oberfläche 5, dessen vertikale Ausdehnung dem Partikeldurchmesser der Kontaminationspartikel 6 entspricht, eine Streuzone 7 dar. In einer vertikalen Richtung z, die senkrecht zu den Schichtebenen der optischen Beschichtung verläuft, ist also der Bereich zwischen der Oberfläche 5 und einer Obergrenze 8, welche durch den Partikeldurchmesser der Kontaminationspartikel gegeben ist, die Streuzone 7. Die Obergrenze 8 der Streuzone 7 ist in Figur 1 durch eine gestrichelte Linie symbolisiert.

Der in Figur 1 schematisch dargestellte Verlauf der elektrischen Feldstärke E in vertikaler Richtung z zeigt, dass die elektrische Feldstärke E im Bereich der Streuzone 7 ein Minimum aufweist. Auf diese Weise wird vorteilhaft erreicht, dass die auf der Oberfläche 5 angelagerten Kontaminationspartikel 6 bei der bestimmungsgemäßen Verwendung der optischen Beschichtung 2, insbesondere als Reflektor, nur wenig Streulicht emittieren.

Dies kann bei der Herstellung der optischen Beschichtung 2 beispielsweise dadurch erreicht werden, dass die Dicke der dielektrischen Schicht 4 derart eingestellt wird, dass die elektrische Feldstärke im Bereich der Streuzone 7 ein Minimum aufweist. Eine dazu geeignete Dicke der dielektrischen Schicht 4 wird zum Beispiel durch eine Simulationsrechnung aufgefunden.

Eine solche Simulationsrechnung ist beispielhaft in Figur 2 dargestellt, in der der totale Streuverlust TS in Abhängigkeit von der Schichtdicke d der obersten Schicht einer optischen Beschichtung dargestellt ist. Simuliert wurde der totale Streuverlust TS durch Oberflächenkontaminationen für eine optische Beschichtung, die eine Aluminiumschicht und eine darauf angeordnete Al₂O₃-Schicht entsprechend dem Ausführungsbeispiel der Figur 1 aufweist.

Für die Simulation wurden eine Beleuchtungswellenlänge λ = 640 nm und Kontaminationspartikel mit Partikeldurchmessern von 200 nm angenommen. Es zeigt sich, dass der Streuverlust TS bei bestimmten Schichtdicken von beispielsweise etwa 120 nm oder 310 nm besonders gering ist. Mit diesen optimierten Schichtdicken der obersten Al₂O₃-Schicht ist es möglich, den Streuverlust gegenüber einem nicht optimierten Schichtsystem, beispielsweise mit einer Schichtdicke von 0 nm oder 50 nm, um etwa einen Faktor 40 zu vermindern.

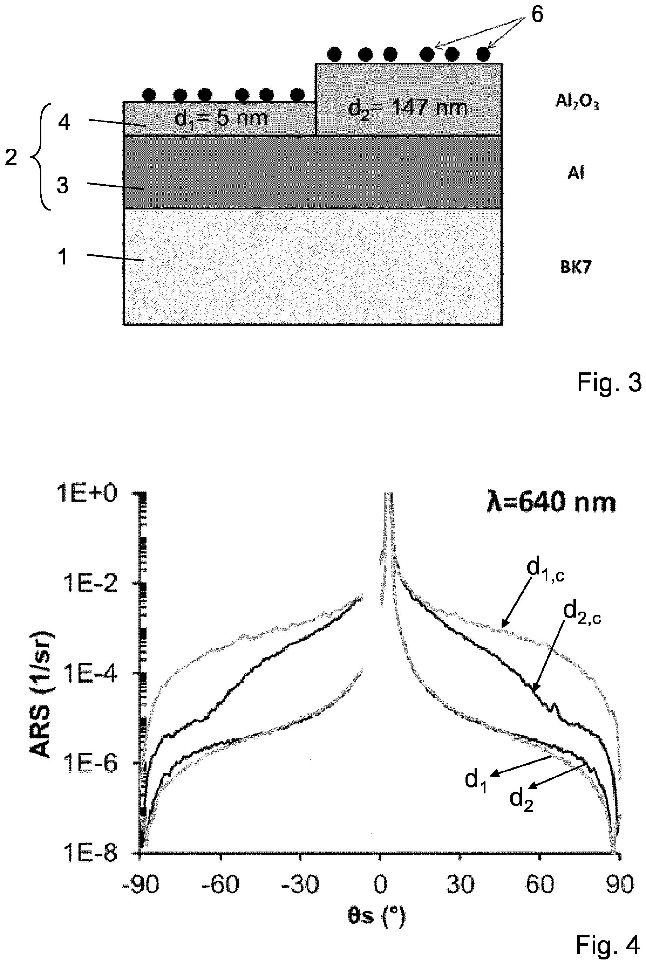

Figur 3 zeigt schematisch den Schichtaufbau von Ausführungsbeispielen der optischen Beschichtung 2 mit einem Substrat 1 aus BK7-Glas, einer 100 nm dicken Aluminiumschicht 3 und einer Al₂O₃-Schicht 4. Bei der links dargestellten Ausführung ist die Al₂O₃-Schicht d₁ = 5 nm dick.

Bei dem rechts dargestellten Beispiel ist die Al₂O₃-Schicht d₂ = 147 nm dick.

Figur 4 zeigt Messungen der winkelaufgelösten Streuung (ARS) in Abhängigkeit vom Streuwinkel Θ_{S} für die in Figur 3 dargestellten Ausführungsbeispiele mit den verschiedenen Schichtdicken d₁ und d₂ vor einer Kontamination (Kurven d₁ und d₂) sowie nach einer Kontamination der Oberfläche mit Polystyrolkugeln mit 200 nm Durchmesser (Kurven d_{1,c} und d_{2,c}).

Die Winkelaufgelöste Streuung ARS (Angle Resolved Scattering) ist definert als ARS (θ_{S},φ_{S}) = ΔP_{S}(θ_{S},φ_{S}) / (Pᵢ ΔΩ_{S}). ΔP_{S} entspricht hierbei der in das Raumwinkelelement ΔΩ_{S} gestreuten Leistung, wobei θ_{S} der polare Streuwinkel und φ_{S} der azimutale Streuwinkel ist. Pᵢ entspricht der Einfallsleistung. Alternativ kann auch die BSDF (Bidirectional Scattering Distribution Function) verwendet werden, die sich über BSDF (θ_{S},φ_{S}) = ARS(θ_{S},φ_{S}) / cos(θ_{S}) aus der ARS berechnen lässt. Es zeigt sich, dass die winkelaufgelöste Streuung und damit der Streuverlust bei dem Beispiel mit der optimierten Schichtdicke d₂ = 147 nm wesentlich niedriger ist als bei dem Beispiel mit d₁ = 5 nm.

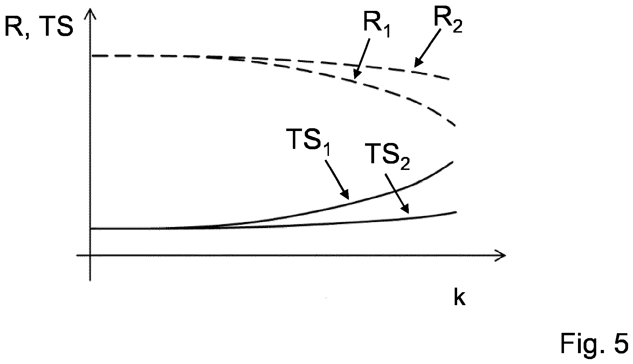

In Figur 5 sind schematisch die Reflektivität R und der Streuverlust TS in Abhängigkeit vom Kontaminationsgrad k der Oberfläche (in willk. Einheiten) für eine optische Beschichtung gemäß einem Ausführungsbeispiel und ein nicht erfindungsgemäßes Vergleichsbeispiel einer optischen Beschichtung dargestellt. TS lässt sich über Integration der ARS berechnen. Bei dem Vergleichsbeispiel nimmt die Reflektivität R₁ mit zunehmendem Kontaminationsgrad k vergleichsweise stark ab und der Streuverlust TS₁ vergleichsweise stark zu. Bei einer optischen Beschichtung gemäß dem Ausführungsbeispiel fällt die Abnahme der Reflektivität R₂ mit zunehmendem Kontaminationsgrad wesentlich geringer aus. Dies beruht insbesondere darauf, dass bei dem Ausführungsbeispiel der Streuverlust TS₂ mit zunehmendem Kontaminationsgrad k weniger stark ansteigt als bei dem Vergleichsbeispiel. Die optische Beschichtung gemäß dem Ausführungsbeispiel hat deshalb den Vorteil, dass eine vergleichsweise hohe Reflektivität auch dann erhalten bleibt, wenn sich auf der Oberfläche Kontaminationspartikel anlagern. Die Erfindung ist nicht durch die Beschreibung anhand der Ausführungsbeispiele beschränkt. Vielmehr umfasst die Erfindung jedes neue Merkmal sowie jede Kombination von Merkmalen, was insbesondere jede Kombination von Merkmalen in den Patentansprüchen beinhaltet, auch wenn dieses Merkmal oder diese Kombination selbst nicht explizit in den Ausführungsbeispielen angegeben ist.

## Patentansprüche

1. Verfahren zur Herstellung einer optischen Beschichtung mit verminderter Lichtstreuung,
umfassend die Schritte:
- Bestimmung eines Schichtdesigns der optischen Beschichtung (2), wobei die Bestimmung des Schichtdesigns eine Bestimmung der Anordnung von Schichten (3, 4), eine Bestimmung der Schichtmaterialien und eine Bestimmung der Schichtdicken der Schichten (3, 4) umfasst,
- Rechnerische Optimierung der Reflexion oder Transmission der optischen Beschichtung (2) für eine vorgegebene Wellenlänge oder einen vorgegebenen Wellenlängenbereich durch Variation mindestens eines Schichtparameters,
- Bestimmung der Lage einer Streuzone (7) der optischen Beschichtung (2), wobei das Bestimmen der Lage der Streuzone (7) eine Abschätzung der Partikeldurchmesser von im Betrieb der optischen Beschichtung zu erwartenden Kontaminationen (6), die zur Streuung elektromagnetischer Strahlung geeignet sind, an der Oberfläche (5) der optischen Beschichtung (2) umfasst, und wobei die Lage der Streuzone (7) derart bestimmt wird, dass die Streuzone (7) im Bereich der Partikeldurchmesser oberhalb der Oberfläche (5) liegt,
- Rechnerische Optimierung der Lage eines Minimums der elektrischen Feldstärke (E) durch Variation mindestens eines Schichtparameters derart, dass die elektrische Feldstärke in der Streuzone (7) ein Minimum aufweist, wobei das Minimum der elektrischen Feldstärke (E) in einem Bereich zwischen 10 nm und 2,5 µm oberhalb der Oberfläche (5) der obersten Schicht (4) auftritt, und
- Herstellen der optischen Beschichtung (2) mit den durch die rechnerischen Optimierungen bestimmten Schichtparametern auf einem Substrat (1).

2. Verfahren nach Anspruch 1,
wobei die rechnerische Optimierung der Lage des Minimums der elektrischen Feldstärke (E) die Variation der Schichtdicke mindestens einer Schicht (4) umfasst.

3. Verfahren nach Anspruch 2,
wobei die mindestens eine Schicht (4) die oberste Schicht der optischen Beschichtung (2) ist.

4. Verfahren nach einem der Ansprüche 2 oder 3,
wobei die mindestens eine Schicht (4) eine Oxid- oder Fluoridschicht ist.

5. Verfahren nach einem der vorhergehenden Ansprüche,
wobei die rechnerische Optimierung der Reflexion oder Transmission und die rechnerische Optimierung der Lage des Minimums der elektrischen Feldstärke (E) gleichzeitig durchgeführt werden und/oder mindestens einmal wiederholt werden.

## Claims

1. A method of producing an optical coating having reduced light scattering,
comprising the steps of:
- determination of a layer design of the optical coating (2), the determination of the layer design comprising a determination of the arrangement of layers (3, 4), a determination of the layer materials and a determination of the layer thicknesses of the layers (3, 4),
- computational optimisation of the reflection or transmission of the optical coating (2) for a predetermined wavelength or range of wavelengths by varying at least one layer parameter,
- determination of the position of a scattering zone (7) of the optical coating (2), wherein the determination of the position of the scattering zone (7) comprises an estimation of the particle diameters at the surface (5) of the optical coating (2) of contaminations (6) which are to be expected during operation of the optical coating and which are suitable for scattering electromagnetic radiation, and wherein the position of the scattering zone (7) is determined in such a way that the scattering zone (7) lies in the range of the particle diameters above the surface (5),
- computational optimisation of the position of a minimum of the electric field strength (E) by varying at least one layer parameter in such a way that the electric field strength has a minimum in the scattering zone (7), the minimum of the electric field strength (E) occurring in a range between 10 nm and 2.5 µm above the surface (5) of the uppermost layer (4), and
- producing the optical coating (2) with the layer parameters determined by the computational optimisations on a substrate (1).

2. The method according to claim 1,
wherein the computational optimisation of the position of the minimum of the electric field strength (E) comprises varying the layer thickness of at least one layer (4).

3. The method according to claim 2,
wherein the at least one layer (4) is the uppermost layer of the optical coating (2).

4. The method according to any one of claims 2 or 3,
wherein the at least one layer (4) is an oxide or fluoride layer.

5. The method according to any one of the preceding claims, wherein the computational optimisation of the reflection or transmission and the computational optimisation of the position of the minimum of the electric field strength (E) are performed simultaneously and/or repeated at least once.

## Revendications

1. Une méthode de fabrication d'un revêtement optique à diffusion réduite de la lumière,
comprenant les étapes suivantes :
- Détermination d'une conception de couche du revêtement optique (2), la détermination de la conception de couche comprenant une détermination de la disposition des couches (3, 4), une détermination des matériaux de couche et une détermination des épaisseurs de couche des couches (3, 4),
- Optimisation par calcul de la réflexion ou de la transmission du revêtement optique (2) pour une longueur d'onde donnée ou une plage de longueurs d'onde donnée en faisant varier au moins un paramètre de la couche,
- Détermination de la position d'une zone de diffusion (7) du revêtement optique (2), la détermination de la position de la zone de diffusion (7) comprenant une estimation des diamètres de particules de contaminations (6) à attendre pendant le fonctionnement du revêtement optique, qui sont appropriées pour la diffusion du rayonnement électromagnétique, sur la surface (5) du revêtement optique (2), et la position de la zone de diffusion (7) étant déterminée de telle sorte que la zone de diffusion (7) se trouve dans la plage des diamètres de particules au-dessus de la surface (5),
- Optimisation par calcul de la position d'un minimum du champ électrique (E) par variation d'au moins un paramètre de couche de telle sorte que le champ électrique présente un minimum dans la zone de diffusion (7), le minimum du champ électrique (E) apparaissant dans une plage comprise entre 10 nm et 2,5 µm au-dessus de la surface (5) de la couche supérieure (4), et
- Fabrication du revêtement optique (2) avec les paramètres de couche déterminés par les optimisations par calcul sur un substrat (1).

2. La méthode selon la revendication 1,
dans laquelle l'optimisation par calcul de la position du minimum du champ électrique (E) comprend la variation de l'épaisseur d'au moins une couche (4) .

3. La méthode selon la revendication 2,
dans laquelle ladite au moins une couche (4) est la couche supérieure du revêtement optique (2).

4. La méthode selon l'une des revendications 2 ou 3,
dans laquelle ladite au moins une couche (4) est une couche d'oxyde ou de fluorure.

5. La méthode selon l'une quelconque des revendications précédentes,
dans laquelle l'optimisation par calcul de la réflexion ou de la transmission et l'optimisation par calcul de la position du minimum du champ électrique (E) sont effectuées simultanément et/ou sont répétées au moins une fois.
